Europäisches Patentamt

European Patent Office

Office européen des brevets

(11) Publication number : **0 455 480 A1**

# (12) EUROPEAN PATENT APPLICATION

(21) Application number : **91303949.1**

(22) Date of filing : **01.05.91**

(51) Int. Cl.⁵ : **B60S 1/38**

(30) Priority : **02.05.90 GB 9009897**

(43) Date of publication of application :
**06.11.91 Bulletin 91/45**

(84) Designated Contracting States :
**BE DE ES FR IT**

(71) Applicant : **TRICO-FOLBERTH LIMITED**
**Great West Road**
**Brentford Middlesex TW8 9HP (GB)**

(72) Inventor : **Mower, Peter**
**9, Blandford Avenue**
**Whitton, Twickenham, Middlesex (GB)**

(74) Representative : **Pedder, James Cuthbert**
**J.C. Pedder & Co. 38 Norbury Cross**
**Norbury London SW16 4JQ (GB)**

(54) Vertebra for a windscreen wiper blade rubber and a windscreen wiper blade incorporating such a vertebra.

(57) A vertebra for a windscreen wiper blade rubber (23) comprises a pair of flat strips (1, 3) for location in longitudinal grooves (21) in the longitudinal sides of the blade rubber (23), each strip (1,3) being provided with an open captivating slot (7) facing sideways of the strip (1, 3) and extending outside the line of the strip (1, 3) at a position to captivate a claw on the blade harness when the strip (1, 3) is located in the blade rubber (23). At least one strip (1) is bifurcated towards one end, one (13) of the arms (11, 13) of the bifurcation being bent or formed inwardly so that, when assembled to the blade rubber (23), the bent or formed arm (13) will penetrate the rubber (23).

FIG.3

Jouve, 18, rue Saint-Denis, 75001 PARIS

This invention relates to a vertebra for a windscreen wiper blade rubber and to a windscreen wiper blade incorporating such a vertebra.

Modern windscreen wiper blades are usually formed with a harness comprising a plurality of yokes, the ends of which, adjacent to the blade rubber, are provided with claws which hold the blade rubber in place while allowing relative longitudinal movement between the rubber and the claws, or all but one of the claws, so that the blade, together with the rubber can flex to follow the curve of the windscreen to which it is to be applied.

The "rubber" is usually made from rubber, either natural or synthetic and, due to the characteristics of the material, it is not sufficiently rigid in a transverse direction to maintain a proper wipe characteristic. Thus, rigidity is imparted into the rubber by means of a stiffening member(s) or vertebra(e) which extends longitudinally for the length of the rubber.

One type of vertebra which is known is the so called "twin rail" vertebra. This consists of a pair of flat metal or other strips which seat in longitudinal grooves in the blade rubber. The problem then remains of maintaining the vertebra in the blade rubber and also of preventing the blade rubber from sliding out of the claws of the blade harness. In the past, moulded rubbers were used and the requisite location was provide by appropriate moulding of the rubbers. Thus, for example, the slots carrying the vertebra were closed at both ends so as to prevent the vertebra from sliding out longitudinally. The assembly of rubber and vertebra was then retained in the harness by the provision of a pocket in the rubber into which one of the claws of the harness penetrates and is held thereby.

While this has proved to be satisfactory in practice, with the development of technology to reduce production costs, there has been a tendency to change from the relatively expensive moulded rubbers to extruded rubbers. With extruded rubbers, it is not, of course, possible to provide closed end slots so that other means of securing the vertebra in the blade rubber has been found to be necessary. Various proposals have been made for this purpose. For example, it is possible to place an end clip on one or both ends of the rubber and to secure this by providing it with slots by means of which it can be held by the harness claw. However, this solution requires one or two additional parts per blade and thus goes a long way towards taking up the cost saving made by the use of an extruded rubber.

The present invention seeks to provide a vertebra for a blade rubber and a construction of windscreen wiper blade in which some or all of the above disadvantages are reduced or substantially obviated.

According to a first aspect of the invention, a vertebra for a windscreen wiper blade rubber comprises a pair of flat strips for location in longitudinal grooves in the longitudinal sides of the blade rubber, each strip being provided with an open captivating slot facing sideways of the strip and extending outside the line of the strip at a position to captivate a claw on the blade harness when the strip is located in the blade rubber, at least one strip being bifurcated towards one end, one of the arms of the bifurcation being bent or formed inwardly so that, when assembled to the blade rubber, the bent or formed arm will penetrate the rubber.

According to a second aspect of the invention, a windscreen wiper blade comprises a harness including a main yoke or lever, pivotal means for attaching the main yoke or lever to a windscreen wiper arm, at least one secondary yoke or lever pivotally connected in the middle region thereof to one end of the main yoke or lever, the free ends of the yokes or levers being provided with claws, a blade rubber carried by the claws of the yokes or levers and a vertebra in the form of two flat strips located in longitudinal grooves in the blade rubber, wherein each strip is provided with an open slot facing sideways of the strip and extending outside the line of the strip at a position to captivate a claw of the yokes or levers, at least one strip being bifurcated towards one end, one of the arms of the bifurcation being bent or formed inwardly so that it will penetrate the rubber.

Preferably the other of the strips is provided with a recess opposite to the position of the bent or formed arm to receive the end of that arm. If no recess is provided, then both strips may be bifurcated at opposite ends.

Since the strips of the vertebrae are retained in position by engagement of the open slots with the claw or claws of the harness, the bent or formed arm(s) of the vertebra strips will retain the blade rubber in position between them and thus retain it in the harness.

The open slots may be formed in the vertebra strips towards the same ends thereof in which case they will be engaged by different claws, usually claws at opposite ends of the harness. Alternatively, the open slots may be formed towards opposite ends of the strips so that the slots in both strips are engaged by the same harness claw.

The bent or formed arm(s) may be pointed at their ends so as to assist in penetration of the rubber.

The invention will now be described in greater detail, by way of example, with reference to the drawings, in which:-

Figure 1 is a perspective view of one end of a pair of strips forming a vertebra in accordance with a first embodiment of the invention, the blade rubber and harness claw being shown in broken lines;

Figure 2 is a view similar to figure 1 showing the blade rubber and harness claw in full lines;

Figure 3 is a plan view of the pair of strips shown in figures 1 and 2, showing a sectional view of the blade rubber with which they are associated, and Figure 4 is a view similar to figure 3 but showing a second embodiment of the vertebra.

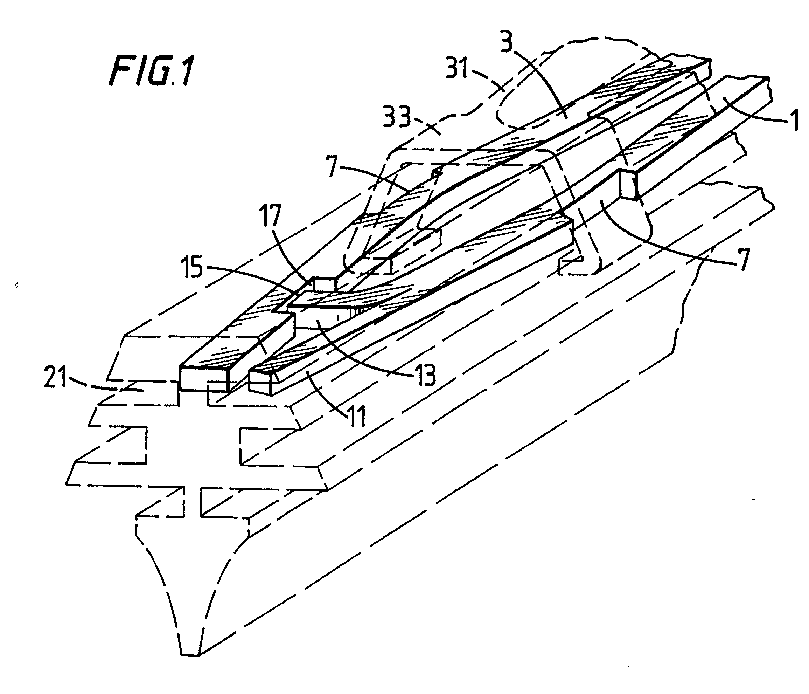

Referring firstly to figures 1 to 3, there is shown a vertebra comprising a pair of flat strips 1 and 3, suitably produced from flattened wire. The major part of each strip 1 and 3 are identical, the two strips being bowed apart at 5 and having outwardly facing slots 7 therein for the purpose of captivating a claw of a blade harness as will be described. The strip 1 is bifurcated at 9 at the end adjacent to the slots 7. One arm 11 of the bifurcation continues along the original line of the strip while the other arm 13 is formed or bent inwardly until the end 15 extends towards the other strip 3. At this point, the strip 3 is provided with a recess 17 for receipt of the end 15 of the arm 13.

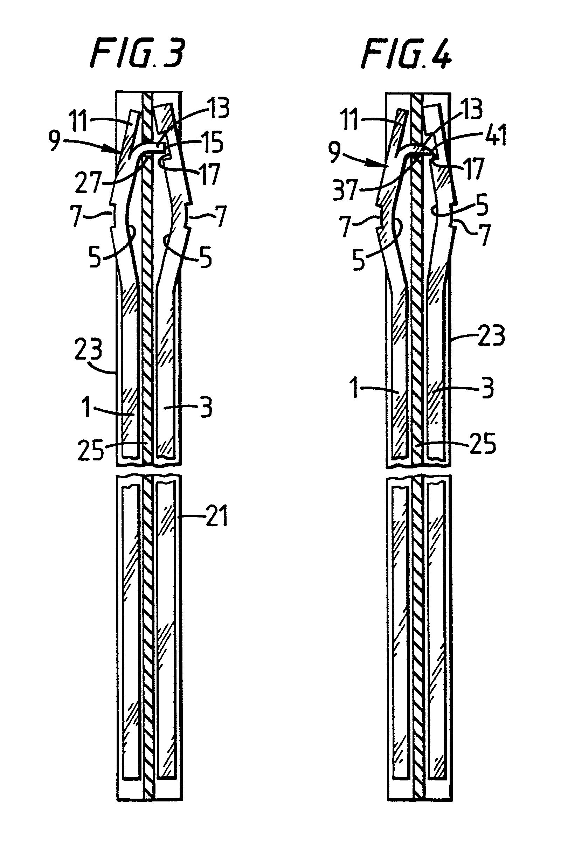

As can be seen particularly from figure 3, the strips 1 and 3 are intended to lie in longitudinal slots 21 in the blade rubber with the arm 13 passing through the central web 25 of the blade rubber 23

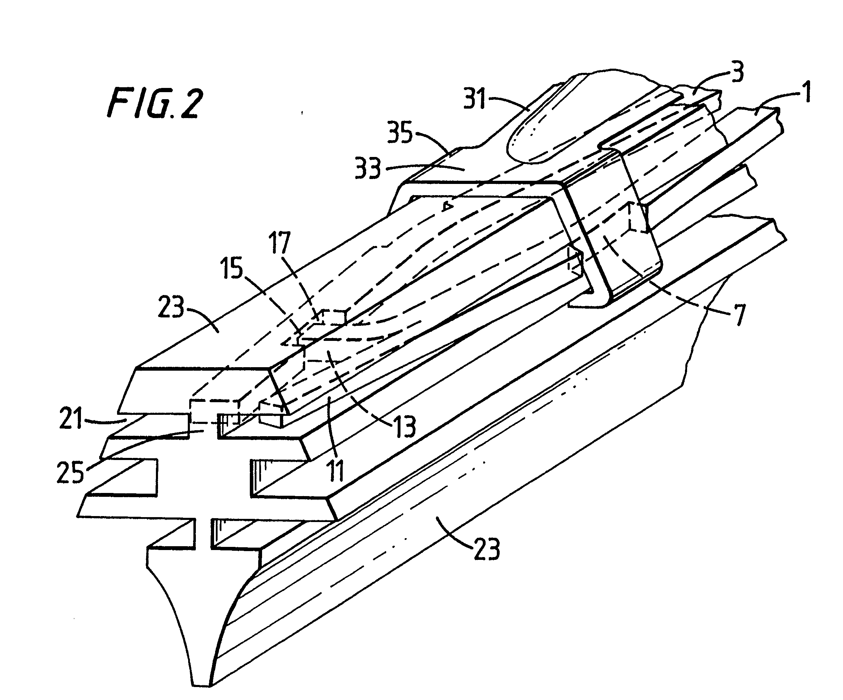

Figures 1 and 2 are perspective views showing the vertebra in use. In these figures are shown a fragment of a blade harness comprising a subsidiary yoke or lever 31 whose free end 33 terminates in a claw 35. The strips 1 and 3 are retained in the harness by the fact that the claw 35 of the subsidiary yoke or lever 31 is captivated in the slots 7. The strip 1 is retained in the rubber 23 by the arm 13 of the bifurcation 9 extending through an aperture 27 in the central web 25 of the blade rubber 23. Thus the blade rubber is held securely on the strip 1. The second strip 3 is retained in position by virtue of the fact that it is captivated by the claw 25 and in that it receives the end 15 of the arm 13 of the strip 1 in its slot 17.

Thus the movement of the strips 1 and 3 is prevented both transversely and longitudinally with respect to the harness by being captivated by the claw 35 and the strip 1 is retained in position in the rubber 23 by the arm 13 thereof. The remaining claws (not shown) of the harness are not captivated, allowing sufficient longitudinal play to be able to follow the curve of a windscreen to which it is applied.

Figure 4 shows a variation of the vertebra shown in figures 1 to 3 in that the arm 13 of the strip 1 is pointed at 41 to assist it passing through the blade rubber 23. Thus in this latter case, a pre-formed aperture 27 in the blade rubber, which may be necessary with the vertebra of figures 1 to 3 may well be dispensed with, the arm 13 forming its own aperture 37.

It will be appreciated that various modifications may be made to the above described embodiments without departing from the scope of the invention. For example, the open slots may be formed in the vertebra strips towards the opposite ends thereof in which case they will be captivated by different claws, usually claws at opposite ends of the harness. Furthermore, if no recess 17 is provided, then both strips may be bifurcated at opposite ends.

From the foregoing, it will be seen that the invention provides a vertebra which, in its described embodiments enables an extruded blade rubber to be secured to a blade harness without the use of additional parts or the need to close in the claws after assembly.

## Claims

1. A vertebra for a windscreen wiper blade rubber (23) comprising a pair of flat strips (1, 3) for location in longitudinal grooves (21)in the longitudinal sides of the blade rubber (23), <u>characterised</u> in <u>that</u> each strip (1,3) is provided with an open captivating slot (7) facing sideways of the strip (1, 3) and extending outside the line of the strip (1, 3) at a position to captivate a claw (35) on the blade harness (31, 33) when the strip (1, 3) is located in the blade rubber (23), at least one strip (1) being bifurcated towards one end, one (13) of the arms (11, 13) of the bifurcation being bent or formed inwardly so that, when assembled to the blade rubber (23), the bent or formed arm (13) will penetrate the rubber (23).

2. A windscreen wiper blade comprising a harness including a main yoke or lever, pivotal means for attaching the main yoke or lever to a windscreen wiper arm, at least one secondary yoke or lever (31) pivotally connected in the middle region thereof to one end of the main yoke or lever, the free ends of the yokes or levers (31) being provided with claws (35), a blade rubber (23) carried by the claws (35) of the yokes or levers (31) and a vertebra in the form of two flat strips (1, 3) located in longitudinal grooves (21) in the blade rubber (23), <u>characterised in that</u> each strip (1, 3) is provided with an open slot (7) facing sideways of the strip (1, 3) and extending outside the line of the strip (1, 3) at a position to captivate a claw (35) of the yokes or levers (31), at least one strip (1) being bifurcated towards one end, one (13) of the arms (11, 13) of the bifurcation being bent or formed inwardly so that it will penetrate the rubber (23).

3. A windscreen wiper blade as claimed in claim 2, <u>characterised in that</u> the other (3) of the strips (1, 3) is provided with a recess (17) opposite to the position of the bent or formed arm (13) to receive the end of that arm (13).

4. A windscreen wiper blade as claimed in claim 2, <u>characterised in that</u> both strips (1, 3) are bifurcated at opposite ends.

5. A windscreen wiper blade as claimed in claim 2, 3 or 4, characterised in that the open slots (7) are formed in the vertebra strips (1, 3) towards the same ends thereof so that the slots (7) in the strips (1, 3) will be engaged by different claws (35) of the harness.

6. A windscreen wiper blade as claimed in claim 5, characterised in that the open slots (7) are so arranged as to engage claws (35) at opposite ends of the harness.

7. A windscreen wiper blade as claimed in claim 2, 3 or 4, characterised in that the open slots (7) are formed towards opposite ends of the strips (1, 3) so that the slots (7) in both strips (1, 3) are engaged by the same harness claw (35).

8. A windscreen wiper blade as claimed in any preceding claim, characterised in that the bent or formed arm(s) (13) is/are pointed at their ends so as to assist in penetration of the rubber ( 23 ).

FIG.1

EP 0 455 480 A1

FIG.2

EP 0 455 480 A1

# FIG.3

# FIG.4

EP 0 455 480 A1

European Patent Office

**EUROPEAN SEARCH REPORT**

Application Number

EP 91 30 3949

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2502086 (MARCHAL) <br> * page 7, line 31 - page 8, line 12 * | 1, 2, 7, 8 | B60S1/38 |
| Y | | 3 | |
| Y | DE-U-1813417 (SWF) <br> * page 5, lines 3 - 8 * | 3 | |
| A | EP-A-0260809 (CHAMPION SPARK PLUG) <br> * the whole document * | 1, 2 | |
| A | US-A-3659310 (ROSEN) <br> * the whole document * | 1, 2 | |
| P,A | EP-A-0380360 (TRICO-FOLBERTH) <br> * the whole document * | 1, 2 | |

| | | | TECHNICAL FIELDS SEARCHED (Int. Cl.5 ) |
|---|---|---|---|
| | | | B60S |

The present search report has been drawn up for all claims

| Place of search | Date of completion of the search | Examiner |
|---|---|---|
| BERLIN | 31 JULY 1991 | STANDRING, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8